# EUROPEAN PATENT APPLICATION

(11) **EP 4 848 068 A1**
(43) Date of publication of application: **02.12.2026**
(21) Application number: 26182416.3
(22) Date of filing: 01.06.2026
(51) Int. Cl.: G06F 3/16, H04W 4/10

(54) **SYSTEMS, METHODS, AND DEVICES FOR AN INTELLIGENT VOICE COMMUNICATION SYSTEM**

(30) Priority: 30.05.2025 US 202563815210 P
(71) Applicant: ET Fusion Inc., Beamsville, Ontario L0R 1B1 (CA)
(72) Inventor: Holmes, Scott, Beamsville L0R 1B1 (CA); Barnard, Joel James, Beamsville L0R 1B1 (CA)
(74) Representative: Barker Brettell LLP

(57) **Abstract**

In one embodiment, a system, method, and computer-readable medium for intelligent voice-based communication in low-bandwidth environments are disclosed. The system includes a computing unit operatively coupled to a radio transceiver and configured to receive voice input over a native voice channel, perform direct voice-based reasoning without intermediate speech-to-text conversion, and generate corresponding voice outputs or system actions. Processing may occur locally or via cloud resources based on task and network conditions. The system supports multilingual voice brokering, context-aware interaction, and autonomous escalation of events. Communications are individually routed to authorized users, devices, or autonomous platforms across RF or IP networks while operating independently of a centralized data plane to reduce latency and bandwidth consumption. Additional features include bidirectional bridging between digital messaging channels and voice users, and a shared multi-modal information layer for synchronized data access across devices, enabling resilient, real-time coordination in constrained communication environments.

## Description

### FIELD

The present disclosure relates to telecommunication and, in particular, to telecommunication using voice-based input and autonomous output.

### BACKGROUND

First communication devices (such as two-way radios and push-to-talk systems) are widely used across a range of critical sectors, including public safety, industrial operations, agriculture, transportation, and remote field services. These systems are especially valued in environments where cellular or broadband infrastructure is unreliable or absent.

Despite their reliability, existing systems lack contextual reasoning, multilingual support, proactive safety logic, autonomous operational coordination, and modern artificial intelligence (AI) integration. Some legacy solutions incorporate scripted responses or keyword-triggered automation; however, such approaches are static, inflexible, and often depend on converting speech to text before processing commands. This reliance on speech-to-text mechanisms introduces additional latency, consumes unnecessary bandwidth, and reduces the system's ability to operate effectively under constrained network conditions.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### SUMMARY

In accordance with an aspect, there is provided a system for autonomous or controlled communication within first communication environments, the system including: at least one computing unit operatively connected to a radio transceiver and an information system; wherein the computing unit is configured to: receive voice-based input over a native voice channel from an authorized user, device, or autonomous unit; process the voice-based input either locally on the computing unit or remotely through a cloud-based processing resource; perform reasoning, language brokering, or environmental interpretation based on the voice-based input; generate corresponding voice-based outputs or system actions in response to the voice-based input; and transmit the voice-based outputs or initiate the system actions over the native voice channel or an associated communication interface, wherein communications are routed individually to authorized users, devices, or autonomous units across RF or IP networks, and wherein the system operates independently of a centralized data-plane connection to minimize bandwidth consumption and reduce task completion latency in low-bandwidth environments.

In accordance with an aspect, there is provided a method for facilitating autonomous or controlled communication within first communication environments, the method including: receiving, at a computing unit operatively connected to a radio transceiver and an information system, a voice-based input over a native voice channel from an authorized user, device, or autonomous unit; processing the voice-based input either locally on the computing unit or remotely through a cloud-based processing resource; performing reasoning, language brokering, or environmental interpretation based on the voice-based input; generating corresponding voice-based outputs or system actions in response to the voice-based input; transmitting the voice-based outputs or initiating the system actions over the native voice channel or an associated communication interface; and routing communications individually to authorized users, devices, or autonomous units across RF or IP networks, wherein the method operates independently of a centralized data-plane connection to minimize bandwidth consumption and reduce task completion latency in low-bandwidth environments.

In accordance with another aspect, there is provided a non-transitory computer readable medium or media storing instructions which, when executed by at least one processor, configure the at least one processor for: receiving, at a computing unit operatively connected to a radio transceiver and an information system, a voice-based input over a native voice channel from an authorized user, device, or autonomous unit; processing the voice-based input either locally on the computing unit or remotely through a cloud-based processing resource; performing reasoning, language brokering, or environmental interpretation based on the voice-based input; generating corresponding voice-based outputs or system actions in response to the voice-based input; transmitting the voice-based outputs or initiating the system actions over the native voice channel or an associated communication interface; and routing communications individually to authorized users, devices, or autonomous units across RF or IP networks, wherein the method operates independently of a centralized data-plane connection to minimize bandwidth consumption and reduce task completion latency in low-bandwidth environments.

In accordance with another aspect, there is provided a bidirectional digital messaging bridge that allows external digital senders (SMS, email, group chat platforms such as Microsoft Teams^{™} or Slack^{™}, instant messaging, and webhook-based services) to address a radio user via a digital address mapped to that user; the Voice Assisted Radio Intelligence (V-ARI) unit speaks the message to the user, captures the user's voice reply, and routes it back via the originating digital channel.

In accordance with another aspect, there is provided a multi-modal display and information ecosystem in which a shared V-ARI information layer is created, read, updated, and deleted across two-way radio, mobile application, push-to-talk-over-cellular (PoC) device, TV / smart-display application (e.g., Amazon Fire TV^{™}, Roku^{™}, Apple TV^{™}, Chromecast^{™}, smart-TV apps), web dashboard, and in-vehicle display modalities, with multilingual rendering.

It is to be understood that the foregoing summary is provided to introduce a selection of concepts in a simplified form that are further described in detail below. It is not intended to identify key or essential features of the claimed subject matter, nor is it intended to be used as an aid in determining the scope of the claimed subject matter.

### BRIEF DESCRIPTION OF THE DRAWINGS

Non-limiting and non-exhaustive embodiments of the present disclosure are described with reference to the following figures, wherein like reference numerals refer to like parts throughout the various figures unless otherwise specified:
FIG. 1 is a schematic block diagram of a system architecture, including a V-ARI Cloud, a V-ARI Gateway Device, a Radio Network, and a plurality of user radios, dispatch consoles, and autonomous units, according to some embodiments;
FIG. 2 is a flowchart depicting a proactive voice-interaction method, including audio reception, raw audio optimization, voice analysis and instruction parsing, system processing, voice output, response handling, and conditional session handling, according to some embodiments;
FIG. 3 is a schematic view of deployment configurations, including (A) a fixed-site installation, (B) a vehicle-based deployment, (C) a mobile trailer deployment with onboard power and environmental control, and (D) an unmanned platform deployment with V-ARI embedded, according to some embodiments;
FIG. 4 is a process diagram depicting a multilingual voice brokering workflow including call initiation, speech parsing and intent extraction, translation and message routing, message reception, delivery confirmation, and a reciprocal reply flow, according to some embodiments;
FIG. 5 is a flowchart depicting an incident escalation workflow for a fall-alert event, including alarm reception, voice prompting, response monitoring, escalation via a plurality of channels (SMS, email, phone call, siren/klaxon), and event logging, according to some embodiments;
FIG. 6 is a schematic view of an autonomous drone operations architecture, including an unmanned platform with onboard V-ARI processing, a low-bandwidth RF voice channel, a ground control station, and deferred cloud synchronization, according to some embodiments;
FIG. 7 is a comparative diagram of supported radio network and communication variants, including simplex RF, trunked RF, LTE/5G push-to-talk-over-cellular, Wi-Fi push-to-talk, LoRa, software-defined radio, and satellite communication, according to some embodiments;
FIG. 8 is a schematic view of extreme-environment deployment scenarios, including arctic/polar, underground/mining, maritime/offshore, and high-temperature industrial deployments, each panel depicting environment-specific hardware adaptations individually called out, according to some embodiments;
FIG. 9 is a flowchart depicting a local-versus-cloud processing decision flow based on task complexity, network availability, and resource constraints, according to some embodiments;
FIG. 10 is a schematic view of multi-unit V-ARI coordination across distributed mission areas, including exchange of voice commands, status reports, environmental alerts, and mission-relevant control signals via a shared communication fabric, according to some embodiments;
FIG. 11 is a schematic view of a voice-to-voice native processing pipeline, contrasted with a conventional speech-to-text/text-to-speech pipeline, including direct voice reasoning and optional cloud handoff, according to some embodiments; and
FIG. 12 is an end-to-end method flowchart depicting receipt of voice input, source authentication, processing decision, reasoning, output generation, escalation handling, transmission, and event logging, with a proactive/event-based loopback, according to some embodiments.
FIG. 13 is a schematic view of a digital messaging bridge of a communication system, depicting bidirectional translation between an external digital messaging channel and a native voice channel of a radio user, according to some embodiments; and
FIG. 14 is a schematic view of a multi-modal display and information ecosystem of a communication system, depicting a shared information layer accessed concurrently by a plurality of input/output modalities including two-way radio, mobile application, push-to-talk-over-cellular device, TV or smart-display application, web dashboard, and in-vehicle display, according to some embodiments.

### DETAILED DESCRIPTION OF EMBODIMENTS

In the following description, for the purposes of explanation, numerous specific details are set forth in order to provide a thorough understanding of the present embodiments. It will be apparent, however, that the present embodiments may be practiced without these specific details.

The principles, uses and implementations of the teachings herein may be better understood with reference to the accompanying description and figures. Upon perusal of the description and figures present herein, one skilled in the art is able to implement the invention without undue effort or experimentation. In the figures, like reference numerals refer to like parts throughout.

Before explaining at least one embodiment in detail, it is to be understood that the embodiments are not necessarily limited in its application to the details of construction and the arrangement of the components and/or methods set forth herein. The description is capable of other embodiments or of being practiced or carried out in various ways. The phraseology and terminology employed herein are for descriptive purpose and should not be regarded as limiting.

Additional objects, features and advantages of the embodiments will be set forth in the detailed description which follows, and in part will be readily apparent to those skilled in the art from the description or recognized by practicing the invention as described in the written description and claims hereof, as well as the appended drawings. Various features and sub-combinations of embodiments of the invention may be employed without reference to other features and sub-combinations.

It is to be understood that both the foregoing general description and the following detailed description, including the materials, methods and examples, are merely exemplary, and are intended to provide an overview or framework to understanding the nature and character of the embodiments, and are not intended to be necessarily limiting.

As used herein, the terms "comprise," "comprises," "comprising," "include," "includes," "including," "have," "has," and "having" are intended to be open and non-limiting terms, and are to be construed as meaning "including, but not limited to," unless the context clearly dictates otherwise. The term "consist of" and its variants are intended to be closed terms, and the term "consist essentially of" and its variants are intended to limit the scope of a claim to the specified materials or steps and those that do not materially affect the basic and novel characteristics of the claimed subject matter.

Unless expressly indicated otherwise, the singular forms of nouns such as "a," "an," and "the" are intended to include the plural form thereof, and vice versa. Thus, for example, reference to "a component" or "an element" may encompass one or more components or elements. Similarly, reference to "one embodiment" or "an embodiment" is not intended to exclude the possibility that multiple embodiments may include the same feature, structure, or step.

The terms "about," "substantially," "approximately," and other terms of degree are intended to convey a reasonable range of values or conditions that one of ordinary skill in the art would consider equivalent to the recited numerical value or condition, given normal measurement or manufacturing tolerances, system precision, and expected variations in performance. Unless otherwise indicated, such terms generally refer to a variation of ±10%, or to a degree that does not materially affect the operation or outcome of the described feature.

As used herein, "may" is employed to indicate that a feature or element is optional or may be present in some embodiments and absent in others. The phrase "at least one of" followed by a list of elements or features is intended to mean any combination of one or more of the listed elements or features, including combinations thereof.

It is further understood that the terminology used herein is for the purpose of describing particular embodiments only and is not intended to be limiting. Any term not specifically defined herein should be accorded its ordinary and customary meaning as understood by one of ordinary skill in the art in light of the present disclosure and the relevant technical field.

Embodiments described herein relate generally to first communication systems, and more particularly to the integration of artificial intelligence into first communication devices and autonomous systems. In some embodiments, a system provides voice-assisted radio intelligence (V-ARI).

In some embodiments, the system operates directly over the voice channel without using a separate data plane, avoiding speech-to-text translation and reducing resource consumption. In some embodiments, by eliminating the need for additional packetized data transport and avoiding the overhead of natural language processing steps during transmission, the system minimizes task completion latency, preserves bandwidth, and maintains operational effectiveness even under severely bandwidth-constrained conditions. This approach preserves real-time conversational capabilities while significantly extending the reach and resilience of communications in environments where traditional data-driven solutions are impractical.

Autonomous systems, including unmanned aerial vehicles (UAVs), unmanned ground vehicles (UGVs), and other remote platforms, face challenges. These systems traditionally rely on high-bandwidth telemetry or centralized control, restricting their adaptability and operational effectiveness in wide-area, low-bandwidth environments.

Accordingly, there exists a need for a system that integrates AI-driven reasoning, voice-to-voice conversational processing, proactive safety monitoring, multilingual brokering, autonomous coordination, and event-driven or on-demand interaction with both human operators and autonomous platforms, all optimized for operation within bandwidth-constrained communication environments

In some embodiments, the system enables proactive, bi-directional querying with initialization performed on event-based activities or on demand; autonomous enablement of worker safety in lone worker, confined, or hazardous spaces; real-time language brokering and translation; operational automation and intelligent control; and/or voice-based interaction with unmanned platforms in typically low-bandwidth communication environments, and also wide-area, or satellite-enabled communication networks.

In some embodiments, the system is further distinguished by its ability to conduct natural, context-aware conversations and perform reasoning through a language model framework. Functioning as an automated dispatcher, the system can autonomously initiate communication, interprets environmental and linguistic cues, coordinates field-level responses, interacts with autonomous systems, and delivers mission-relevant outputs without requiring manual user input.

In some embodiments, the architecture of the system advances communication systems by embedding intelligent, context-aware, and conversational capabilities into safety-critical operations, autonomous system coordination, and dynamic field environments.

In some embodiments, the system provides a system and method for autonomous or controlled communication, operational management, and/or mission execution within first communication environments. The system comprises at least one computing unit operatively connected to a radio transceiver and an information system. In some embodiments, multiple computing units may communicate with one another to exchange mission-relevant information, while in other embodiments, a single computing unit operates independently to interact with first communication devices and users. The computing unit is configured to execute voice reasoning and language brokering directly on incoming audio without converting speech to text, and generates corresponding voice-based outputs for communication over the native voice channel.

In some embodiments, communications are routed individually (1:1) to authorized users across RF or IP-based networks, supporting real-time safety check-ins, location-triggered alerts, digital input triggers, multilingual voice translation, and autonomous escalation via voice, SMS, or email. In some embodiments, the system integrates with donor radios, repeaters, or system controllers, and is compatible with broad-range wireless and satellite communication infrastructures. Deployment can occur at fixed sites, within vehicles, or on mobile or wide-area networks.

In addition, the system, in some embodiments, supports proactive, bi-directional voice-based interaction with autonomous platforms such as unmanned aerial vehicles (UAVs), unmanned ground vehicles (UGVs), and other remote systems operating in low-bandwidth communication environments. A Voice Assisted Radio Intelligence (V-ARI) processing unit, coupled to an RF transceiver onboard the autonomous platform, enables real-time conversational exchanges, autonomous field operations beyond network coverage zones, and deferred offloading of mission data upon reconnection.

In some embodiments, unlike conventional systems that rely on centralized speech-to-text processing, the system operates directly over the voice channel without utilizing a separate data plane, minimizing bandwidth consumption, reducing task completion latency, and ensuring resilient communication even under severely constrained network conditions.

In some embodiments, there is provided a system and method for enabling intelligent, voice-based communication between human operators and autonomous systems over low-bandwidth environments are disclosed. In some embodiments, a Voice Assisted Radio Intelligence (V-ARI) processing unit, operatively connected to a radio transceiver and an information system, processes incoming audio directly without converting speech to text, and generates corresponding voice-based outputs or system actions over the native voice channel or associated interfaces. Communications are routed individually (1:1) to authorized users, devices, or autonomous units across RF or IP networks, supporting real-time safety check-ins, location-triggered alerts, multilingual brokering, and autonomous escalation. The system is compatible with broad-range wireless and satellite communication infrastructures and may be deployed at fixed sites, within vehicles, or across wide-area mobile networks. Local processing and elimination of data-plane reliance minimize bandwidth usage, reduce task completion latency, and enable resilient operation even under severely constrained network conditions.

### System Architecture

In some embodiments, the system comprises at least one computing unit operatively connected to a radio transceiver and an information system. Each computing unit incorporates a Voice Assisted Radio Intelligence (V-ARI) processing framework capable of receiving, interpreting, and responding to voice-based communications without intermediate conversion to text. The computing unit may operate independently or in coordination with other computing units depending on the communication environment and mission requirements.

In some embodiments, the radio transceiver provides the interface between the computing unit and external communication networks, which may include RF-based networks, satellite systems, or wide-area wireless infrastructures. The information system may include local storage, sensor interfaces, databases, external communication relays, or cloud-based services.

In some embodiments, the computing unit includes a local lightweight language model for basic reasoning and voice interaction tasks, with optional dynamic handoff to cloud-based processing resources for more complex operations requiring higher computational capability.

Various embodiments of the system will now be described.

### Communication Process

In some embodiments, in operation, a voice-based input is received over the native voice channel. The system processes this input either locally or via a cloud service, based on configuration settings, task complexity, network availability, and operational requirements.

The system analyzes the voice input to perform one or more of the following functions: contextual reasoning, language translation or brokering, safety event detection, remote and/or environmental interpretation (e.g., situational awareness in autonomous platforms), and execution of voice-initiated operational tasks, including but not limited to generating communications (e.g., emails, SMS), initiating workflows (e.g., ticket creation, information retrieval), recording structured or unstructured data (e.g., notes or logs), and interfacing with external systems or services.

Based on the processing outcome, the system generates a corresponding voice-based output or system action. This response is then transmitted over the native voice channel or another communication interface.

The system supports direct 1:1 routing of communications to authorized users, devices, or autonomous systems, maintaining secure and mission-relevant data flows.

### Voice-Based Processing (Local and Cloud Options)

The computing unit dynamically determines whether to process inputs locally or remotely. Local processing enables real-time interaction with minimal latency and is particularly suitable for constrained environments or simple command sets. When more complex language modeling, decision-making, or data-intensive reasoning is to be used, the system can escalate processing tasks to a connected cloud-based service, assuming sufficient network connectivity is available.

### Low-Bandwidth Operation

In some embodiments, the system is specifically optimized for environments where traditional broadband or cellular networks are unavailable, unreliable, or degraded. By avoiding reliance on packetized data streams and operating directly over voice channels, the system minimizes bandwidth consumption. The architecture does not require a separate data plane for operation, allowing resilient performance in environments with bandwidth availability as low as traditional two-way radio channels (~1-10 kbps).

### Multi-Unit Operation

In embodiments involving multiple V-ARI units, the system enables autonomous coordination and exchange of mission-critical information between computing units. These exchanges can involve voice-based commands, status reports, environmental alerts, or control signals, allowing distributed operation across complex mission spaces such as search-and-rescue zones, agricultural deployments, or security perimeters.

### Escalation, Translation, and Safety Features

In some embodiments, the system incorporates built-in escalation protocols triggered by predefined events or failure conditions, capable of generating alerts via voice output, SMS messaging, or email notifications. In multilingual environments, the system can automatically translate voice communications between parties in real time, enhancing operational effectiveness across diverse workforces. Safety features include periodic check-ins, digital input monitoring, and location-triggered alerts based on geofencing thresholds.

### Deployment Configurations

In some embodiments, the system can be deployed flexibly across a range of environments, including: fixed site installations (e.g., dispatch centers, repeater stations), mobile vehicle-mounted units (e.g., field service vehicles, emergency response trucks), wide-area deployments involving trailer-based or drone-mounted communication relays, integration with or into a drone, ROV or UAV.

### Voice-Assisted Radio Intelligence (V-ARI) Use Cases and Deployment Models

In some embodiments, Voice-Assisted Radio Intelligence (V-ARI) enables advanced, autonomous, and multilingual voice interactions over RF networks and low-bandwidth environments. It supports safety monitoring, cross-language communication, hazard reporting, and autonomous system control without reliance on cloud-based resources, making it ideal for critical and remote operations.

### Digital Messaging Bridge

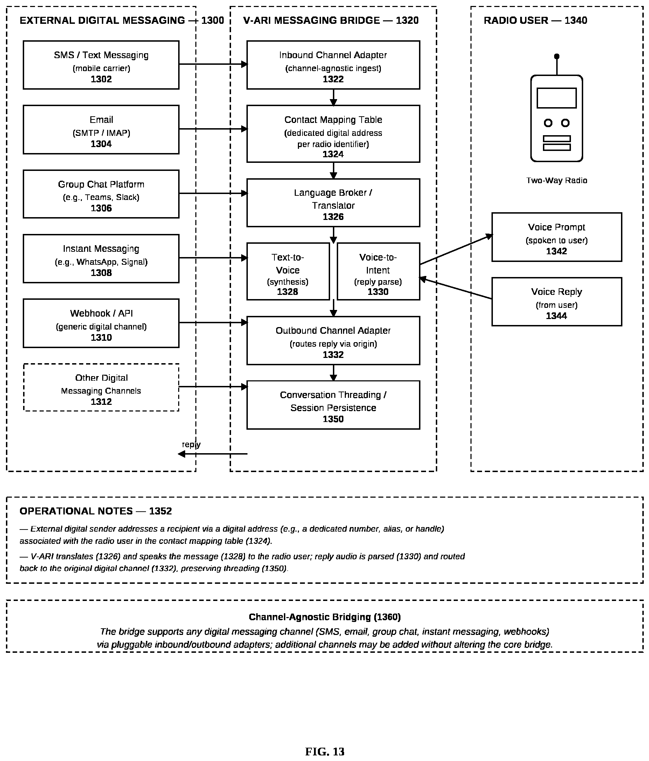

In some embodiments, the system provides a digital messaging bridge that enables bidirectional communication between an external digital messaging sender and a radio user over a native voice channel. As shown in FIG. 13, an external digital messaging source (1300) may include, by way of non-limiting example, Short Message Service (SMS) (1302), email (1304), a group chat platform (1306) such as Microsoft Teams^{™} or Slack^{™}, an instant messaging platform (1308) such as WhatsApp^{™} or Signal, a webhook or application programming interface (1310), and/or any other digital messaging channel (1312).

In some embodiments, a V-ARI messaging bridge (1320) receives an inbound digital message at an inbound channel adapter (1322). The inbound channel adapter is channel-agnostic and presents a normalized representation of the message to the bridge regardless of the originating digital channel. A contact mapping table (1324) associates a digital address (e.g., a dedicated phone number, email address, alias, handle, or other identifier) with a radio identifier corresponding to the intended recipient radio user (1340). In some embodiments, each radio user is associated with a unique dedicated digital address such that an external digital sender may address that radio user as if addressing a conventional digital contact.

In some embodiments, a language broker or translator component (1326) detects a source language and translates the message content into a target language associated with the recipient radio user. A text-to-voice synthesis component (1328) converts the translated message into voice audio that is delivered to the recipient radio user as a voice prompt (1342) over the native voice channel. The voice audio may be fully synthetic, voice-cloned, or assembled from pre-recorded fragments.

In some embodiments, the recipient radio user provides a voice reply (1344) over the native voice channel. A voice-to-intent component (1330) parses the voice reply directly without requiring a centralized speech-to-text data plane. The parsed reply content is provided to the language broker (1326) for translation into the language of the originating digital sender, and an outbound channel adapter (1332) routes the translated reply back to the originating digital channel via the same digital address used by the sender. A conversation threading and session persistence component (1350) maintains conversation state across multiple inbound and outbound exchanges, such that subsequent messages from the external sender are correctly associated with the prior context.

In some embodiments, the digital messaging bridge is channel-agnostic (1360). Inbound and outbound channel adapters (1322, 1332) may be implemented as pluggable modules, and additional digital messaging channels may be added or removed without altering the core bridge components (1324, 1326, 1328, 1330, 1350).

In some embodiments, the digital messaging bridge supports group addressing, broadcast modes, and role-based routing such that an inbound digital message addressed to a role (e.g., "nearest available medic," "safety officer," or "shift supervisor") is automatically directed to a corresponding radio user determined dynamically by the system. In some embodiments, the bridge applies access control and authentication to inbound digital messages prior to delivery to a radio user, including by reference to a sender allow-list, cryptographic verification of webhook payloads, or platform-native authentication tokens.

In some embodiments, the digital messaging bridge operates over the native voice channel between V-ARI and the recipient radio user, thereby preserving the bandwidth efficiency and resilience characteristics of the voice channel even where the external digital messaging channel is implemented over a high-bandwidth IP network.

In one example embodiment, the computing unit of the system for autonomous or controlled communication within first communication environments, is configured to receive a digital message originating from an external digital messaging channel, the digital message being addressed to a digital address associated with an authorized radio user; generate a voice-based output corresponding to the digital message and transmit the voice-based output to the authorized radio user over the native voice channel; receive a voice-based reply from the authorized radio user over the native voice channel; and route a corresponding outbound digital message back to the originating external digital messaging channel. In one embodiment, the external digital messaging channel comprises one or more of: Short Message Service (SMS), electronic mail, a group chat platform, an instant messaging platform, or a webhook-based messaging service. In one embodiment, the computing unit maintains a contact mapping table that associates each of a plurality of authorized radio users with a respective dedicated digital address, such that an external digital sender may address an individual authorized radio user using the dedicated digital address.

In one embodiment, the computing unit performs language translation between a first language of the digital message and a second language of the voice-based output, and between a third language of the voice-based reply and a fourth language of the corresponding outbound digital message, wherein at least the second and third languages may be different. In another embodiment, the computing unit maintains conversation state across a plurality of inbound digital messages and outbound digital messages associated with the same external digital sender and authorized radio user. In one embodiment, the computing unit applies role-based routing to direct an inbound digital message addressed to a role identifier to a radio user dynamically selected as a current holder of the role.

### Multi-Modal Display and Information Ecosystem

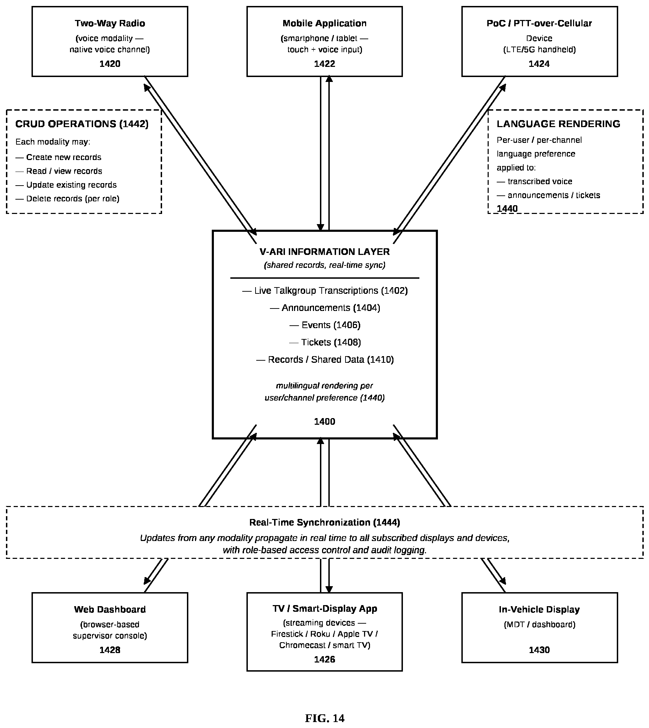

In some embodiments, the system provides a multi-modal display and information ecosystem that maintains a shared information layer accessible concurrently by a plurality of input and output modalities. As shown in FIG. 14, a V-ARI information layer (1400) maintains shared records that may include, by way of non-limiting example, live talkgroup transcriptions (1402), announcements (1404), events (1406), tickets (1408), and other records or shared data (1410). The information layer supports real-time synchronization (1444) such that updates originating from any modality are propagated in real time to all subscribed displays and devices, subject to role-based access control and audit logging.

In some embodiments, the input/output modalities include a two-way radio (1420) interfacing via the native voice channel; a mobile application (1422) executing on a smartphone, tablet, or comparable mobile device and supporting touch and/or voice input; a push-to-talk-over-cellular (PoC) device (1424); a TV or smart-display application (1426); a web dashboard (1428); and an in-vehicle display (1430). The TV or smart-display application (1426) may be implemented on a streaming media device or smart-TV platform, including by way of non-limiting example Amazon Fire TV, Roku, Apple TV, Chromecast, or a native smart-TV application, and/or on a large-screen signage display.

In some embodiments, each modality may perform create, read, update, and delete (CRUD) operations (1442) against the records maintained by the V-ARI information layer (1400), subject to role-based authorization. By way of non-limiting example, an announcement created over the two-way radio (1420) by a supervisor may be automatically transcribed, stored as a record in the announcement category (1404), translated into one or more target languages, and rendered concurrently on the mobile application (1422), TV or smart-display application (1426), and web dashboard (1428). A ticket (1408) may be created by voice from the two-way radio (1420), reviewed and updated from the web dashboard (1428), and closed from the mobile application (1422), with all changes propagating in real time to subscribed displays.

In some embodiments, the rendering of records on each display modality applies a per-user or per-channel language preference (1440) such that the same record (e.g., an event listing or live transcription) may appear in different languages on different displays without the underlying record being duplicated. The language broker described elsewhere in this disclosure may be invoked at render time to perform translation.

In some embodiments, the live talkgroup transcriptions (1402) include continuous transcription of voice traffic on one or more designated talkgroups, with each transcribed entry tagged with speaker identity (where available), timestamp, talkgroup identifier, and source language. The transcriptions may be filtered by talkgroup, user, time range, language, or content, and may be exported, archived, or referenced from tickets (1408) or events (1406).

In some embodiments, the multi-modal display and information ecosystem operates in conjunction with the digital messaging bridge described in connection with FIG. 13, such that a record (e.g., a ticket (1408) or announcement (1404)) created or updated via an external digital messaging channel (1300) is reflected in the shared information layer (1400) and rendered to all subscribed display modalities, and conversely such that an action taken on a record from any display modality may, where appropriate, generate an outbound digital message via the bridge.

In one example embodiment, the computing unit of the system for autonomous or controlled communication within first communication environments, is configured to maintain a shared information layer comprising a plurality of records; expose the shared information layer concurrently to a plurality of input/output modalities, the modalities comprising at least the native voice channel and a digital display modality; permit each modality, subject to role-based access control, to create, read, update, or delete records in the shared information layer; and synchronize updates across the plurality of modalities in real time. In one embodiment, the records comprise one or more of: live talkgroup transcriptions, announcements, events, tickets, or other shared data.

In one embodiment, the digital display modality comprises a TV or smart-display application executing on a streaming media device or smart-TV platform, including by way of non-limiting example a device implementing Amazon Fire TV^{™}, Roku^{™}, Apple TV^{™}, Chromecast^{™}, or a native smart-TV application. In one embodiment, the plurality of input/output modalities further comprises one or more of: a mobile application, a push-to-talk-over-cellular (PoC) device, a web dashboard, or an in-vehicle display. In one embodiment, each record is rendered to a given modality according to a per-user or per-channel language preference, such that the same record may be displayed in different languages across different modalities without duplication of the underlying record. In one embodiment, the live talkgroup transcriptions are continuously generated from voice traffic on one or more designated talkgroups, each transcribed entry being tagged with at least a timestamp and a talkgroup identifier.

In one embodiment, in combination with a digital messaging bridge, the digital message being addressed to a digital address associated with an authorized radio user; a record in the shared information layer may be created or updated via the external digital messaging channel, and wherein an action on a record from any of the plurality of modalities may generate an outbound digital message via the digital messaging bridge.

### EXAMPLES

Non-limiting example applications using various embodiments of the system will now be described.

### Example: Lone Worker Safety in Confined Spaces

A utility technician is dispatched to a remote gas processing facility to conduct inspection and maintenance work. The technician's push-to-talk radio is connected to the company's wide-area radio network, allowing communication with central infrastructure across a large geographic region.

As the technician enters the perimeter of the gas plant, their location data is detected by the system using radio positioning or GPS telemetry. The V-ARI system, operating remotely from corporate headquarters, identifies that the technician has entered a predefined danger zone, configured as a geofenced high-risk area.

System Response: "You have entered a designated danger zone. You will be checked on every 10 minutes. Please respond when prompted."

Once acknowledged, the system begins a scheduled safety monitoring protocol, issuing automated voice-based check-ins at 10-minute intervals. If the technician fails to respond: a voice alert is sent to the supervisor; the system logs the technician's last known location and time of last response; and SMS and/or email alerts are optionally triggered to notify supervisory staff off-network.

### Example: Confined Space Incident Detection (Local Simplex Network)

An industrial worker enters a confined tank at a processing facility. The site uses a local simplex RF network, where a donor radio interfaces with a locally installed V-ARI system in a hardened enclosure. The worker's radio includes a fall detection sensor.

After entry, the radio detects either a horizontal position breach or a sudden impact event, triggering a fall alert transmitted over the simplex channel.

System Response: "Fall alert detected. Are you okay? Please respond."

If the worker replies, the system processes the voice natively without speech-to-text. If no response is received: It broadcasts a voice alert to all radios on the channel; activates local alarms (e.g., strobe light, siren); and logs the event and may initiate a repeat prompt cycle.

This use case showcases voice-native, infrastructure-free safety intervention in a confined-space setting.

### Example: Agricultural Deployment with Multilingual Voice Brokering

A large agricultural operation employs a multilingual workforce (English, Spanish, French). Radios are linked via a wide-area RF or LTE-based PTT network, and a central V-ARI system manages translation and routing.

A supervisor issues a message in English: "All spraying operations must stop immediately due to incoming winds."

V-ARI System Response: detects the language (English); translates the message to Spanish and French; and routes the translated voice messages one-to-one to each user's radio.

Output is delivered via synthesized voice or voice-cloned relay of the supervisor. The system logs confirmation replies in native voice and translates them back for the supervisor. This supports real-time, two-way multilingual voice communication without text or dispatch intervention.

### Example: Language Brokering in Mass Casualty Events

During a mass casualty event, multiple agencies (fire, EMS, police) operate on separate RF systems. A centrally deployed V-ARI unit at the EOC is linked to all systems via IP-connected system controllers.

A firefighter issues a mayday: "Mayday, mayday! Entrapment on the south side! Immediate medical needed!"

V-ARI System Response: detects and classifies the emergency; identifies the EMS channel and translates the message to French; and sends the translated message via 1:1 voice to the EMS medic: "Urgence! Individu piégé sur le côté sud. Soins médicaux immédiats nécessaires."

Additionally, the system sends a summary email/SMS to the incident commander including: time, caller ID, translated message, and/or response status.

This enables cross-agency, multilingual dispatching with automatic voice brokering and escalation.

### Example: Autonomous Drone Operations in Low-Bandwidth Environments

In various embodiments, a lightweight V-ARI-compatible processing unit is physically integrated with a drone or unmanned system via an RF transceiver. The RF transceiver may operate within VHF, UHF, microwave, or similar long-range communication bands, typically affording only kilobits per second of throughput.

Operators may issue voice-based queries to the unmanned system, such as "Describe what you see ahead," "What is your current battery status?", or "Proceed to the next waypoint." The onboard V-ARI unit processes these commands locally, without reliance on cloud or external computation, and returns synthesized voice responses. For instance, a drone encountering a fallen tree in a search area may respond with: "Obstacle detected: fallen tree approximately 30 meters ahead. "

In scenarios where the unmanned system moves into zones with no active communication coverage, it continues autonomous operation, storing mission data locally. Upon re-establishing contact, the system synchronizes accumulated data, including video, sensor logs, and activity summaries.

This architecture permits resilient operations in challenging or degraded network environments, expanding the mission profile for autonomous systems in fields such as defense, agriculture, disaster response, and environmental monitoring.

### Sample Drone Use Cases

### Use Case 1: Object Inspection and Hazard Reporting

Operator Command: "Inspect Drift 7 for any observed objects or obstructions and report back. Also, provide your current hydrogen sulfide (H₂S) reading."

Drone Response (drone incorporating an embodiment of the system): "Inspection complete. Observed significant fallen debris throughout Drift 7. Current H₂S reading is 523 ppm. Initiating alarm sequence for Drift 7. Returning to base for decontamination and further instructions."

### Use Case 2: Emergency Evacuation Support

Operator Command: "Scan all active drifts for personnel and guide them to the nearest safe exit. Prioritize Drift 9 first."

Drone Response (drone incorporating an embodiment of the system): "Personnel detected in Drift 9. Initiated guidance sequence to nearest safe exit point Bravo. Confirmed three individuals exiting. Continuing scans in adjacent drifts."

### Operational Features

In some embodiments, all V-ARI responses are designed to be concise, action-oriented, and capable of local decision-making within predefined safety and mission parameters. In some embodiments, alarm sequences, fall detection alerts, and automatic returns are triggered based on critical thresholds. In some embodiments, autonomous systems maintain operational resilience in low-bandwidth and no-bandwidth scenarios. In some embodiments, multilingual brokering and incident escalation capabilities support global operations across language barriers. In some embodiments, architecture permits decentralized voice intelligence without reliance on external speech-to-text or cloud services.

### Radio Network Configurations

In some embodiments, the system may operate over simplex, duplex, trunked, or conventional radio architectures.

In some embodiments, supported voice technologies include: analog FM, digital mobile radio (DMR), project 25 (P25), NXDN, TETRA (Terrestrial Trunked Radio), push-to-talk over LTE (PTT over Cellular / PoC), Wi-Fi-based push-to-talk (warehousing, facilities management, healthcare campuses), and/or LoRa networks for ultra-low bandwidth, long-distance rural or industrial deployments.

In some embodiments, the radio communication interface may also include: software-defined radio (SDR) capable of dynamic frequency and protocol adjustment; and/or full interoperability across multiple bands and encryption standards.

### Computing Unit Deployment Models

In some embodiments, the computing unit may be embedded in a vehicular enclosure (utility or emergency vehicle); a wall-mounted cabinet at a fixed site; a rackmount server at a dispatch center; and a self-contained mobile trailer, including onboard power (generator, battery, solar); RF and network antennas; and ruggedized internal hardware and climate control.

In other embodiments, the computing unit may operate entirely in the cloud, using IP-connected audio streams from digital radios or soft clients.

Edge computing models may be used to balance bandwidth, processing load, and/or mission-critical latency needs.

### Audio and Voice Processing Alternatives

In some embodiments, the system may use machine learning-enhanced audio optimization (denoising, dynamic range control, AGC); directional microphones or beamforming arrays; and/or acoustic models trained for stress indicators or emotion detection.

Output voices may be fully synthetic; voice-cloned for authenticity and command recognition; and/or pre-recorded audio fragments for standard responses.

### Language and Interaction Modalities

In some embodiments, the language broker may include real-time detection of source and target language; support for dialect variants (e.g., Quebec French vs. Parisian); and/or integration with multilingual phonetic engines.

The system may support voice-only interaction by default; optional visual displays on touchscreen radios or mobile terminals; and/or tactile or haptic inputs (e.g., for accessibility, gloved operation).

### Safety Workflow Configurations

In some embodiments, safety workflows may be defined per user role (e.g., technician, supervisor); time-of-day or shift schedule; and/or risk level of the area (e.g., confined space, gas zone).

Escalation steps may include additional voice prompts; notifications via IP messaging, paging systems, or building alert systems; and/or integration with emergency dispatch software, incident tracking tools, or access control systems.

### External System Integration

In some embodiments, the system may receive input from digital I/O contacts (open/close circuits); webhook APIs from cloud or industrial platforms; and/or RTUs, SCADA, or PLC equipment in field or plant automation.

The system may output data to incident management dashboards; audit logging systems; and machine-to-machine (M2M) communication buses.

### Communication Routing Flexibility

Routing logic may support fixed recipient assignments (e.g., safety officer); role-based dynamic routing (e.g., "nearest available medic"); and/or contextual routing based on incident type.

The system may temporarily enter broadcast mode under defined emergency scenarios (e.g., mass evacuation) while still operating under its core 1:1 reasoning model for regular functions.

### Extreme Environment Adaptations

In some embodiments, the system is configured with adaptations, including for arctic/polar conditions (reinforced enclosures, battery warmers and cold-resistant electronics); underground/mining operations (intrinsically safe designs, advanced RF rebroadcast systems and gas detection integration); maritime/offshore deployments (waterproof housings, corrosion-resistant materials and extended RF reach over water); and/or high-temperature industrial sites (heat-resistant casings, active cooling and proactive hazard detection for thermal events).

Example embodiments will now be described with reference to the drawings.

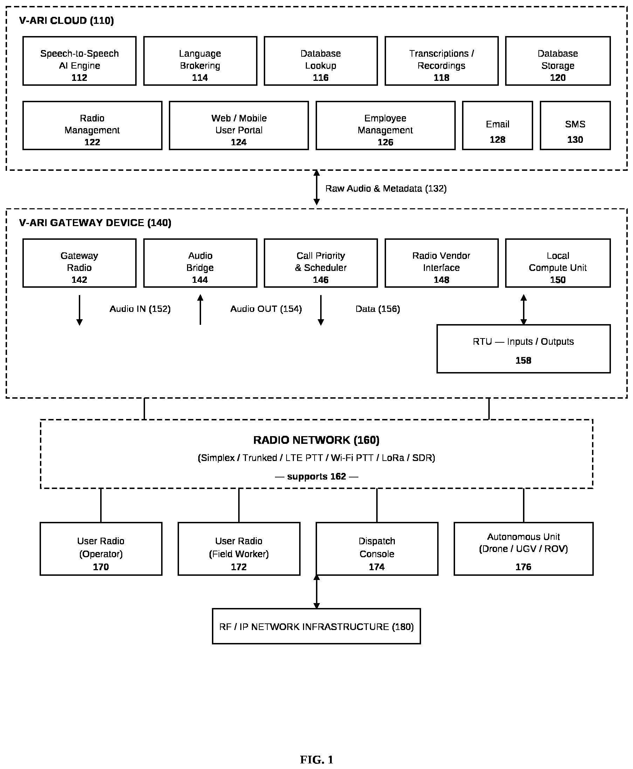

FIG. 1 shows a high-level block diagram showing the V-ARI system architecture, including computing units, radio communication interfaces, external radios, RTU/sensor inputs, information systems (local/cloud), and supervisor alert channels, according to some embodiments. Arrows depict the flow of data and voice signals across the system.

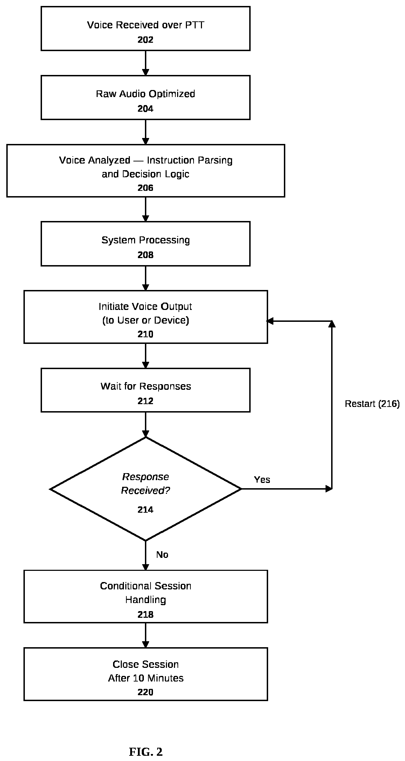

FIG. 2 shows proactive voice interaction in a flowchart representing the V-ARI audio processing method, including audio monitoring, optimization, direct voice analysis without STT, context determination, voice response generation, user interaction handling, and escalation protocols through SMS, email, and additional voice prompts, according to some embodiments.

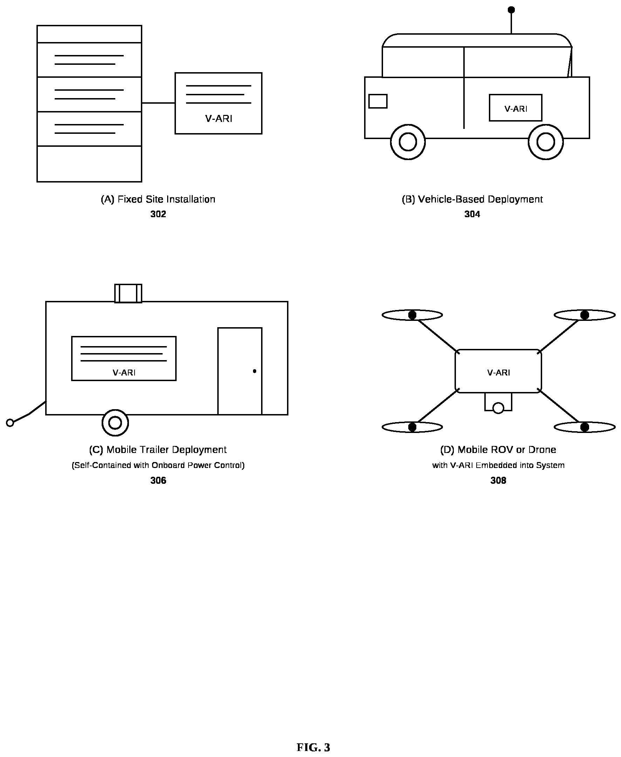

According to some embodiments, FIG. 3 shows deployment configurations in a three-panel diagram illustrating V-ARI deployment models: (A) Fixed site installation (wall-mounted unit); (B) Vehicle-based deployment (mobile service or emergency vehicles); (C) Mobile trailer deployment (self-contained with onboard power and environmental control); and (D) Mobile ROV or Drone with V-ARI embedded into system.

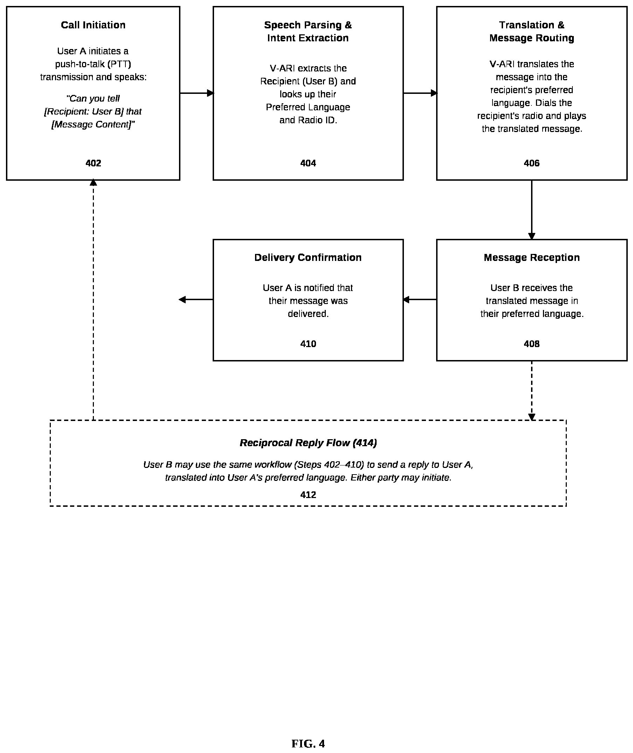

FIG. 4 shows a multilingual voice brokering workflow in a process diagram showing real-time multilingual communication using the V-ARI system, including automatic language detection, translation, voice synthesis or cloning, delivery to the target radio, and optional reverse translation of acknowledgements, according to some embodiments.

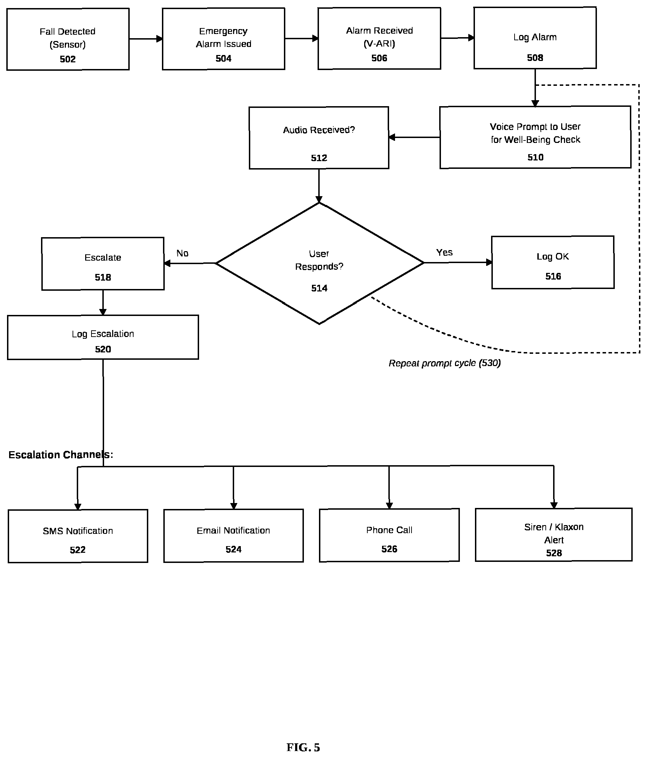

FIG. 5 shows an incident escalation timeline (fall alert example) in a time-sequenced swimlane diagram outlining a fall detection incident, including initial detection, voice prompt issuance, response timeout, escalation actions (voice alert to supervisor and SMS/email notifications), and event logging, according to some embodiments.

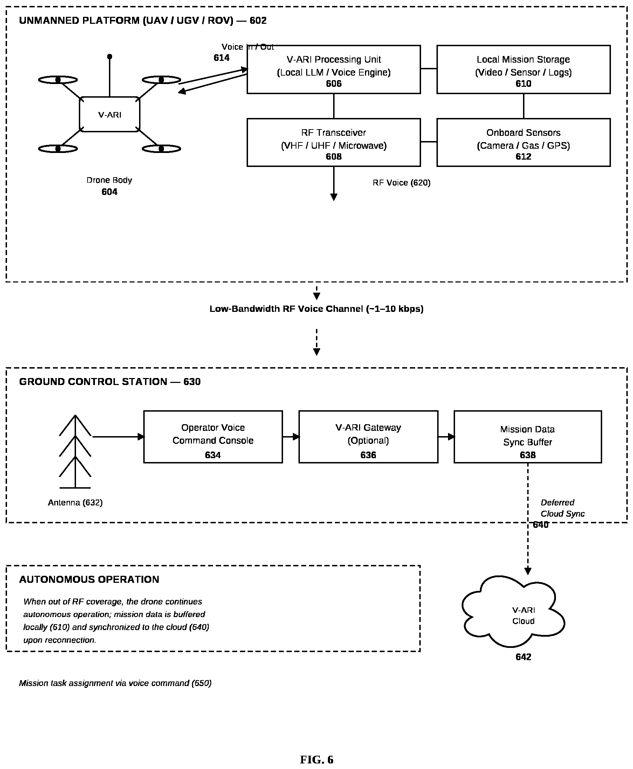

FIG. 6 shows an autonomous drone operations architecture in a system architecture diagram depicting a drone equipped with a V-ARI unit, local storage for mission data, RF communication link with ground control, and delayed cloud synchronization when sufficient network bandwidth is available, according to some embodiments.

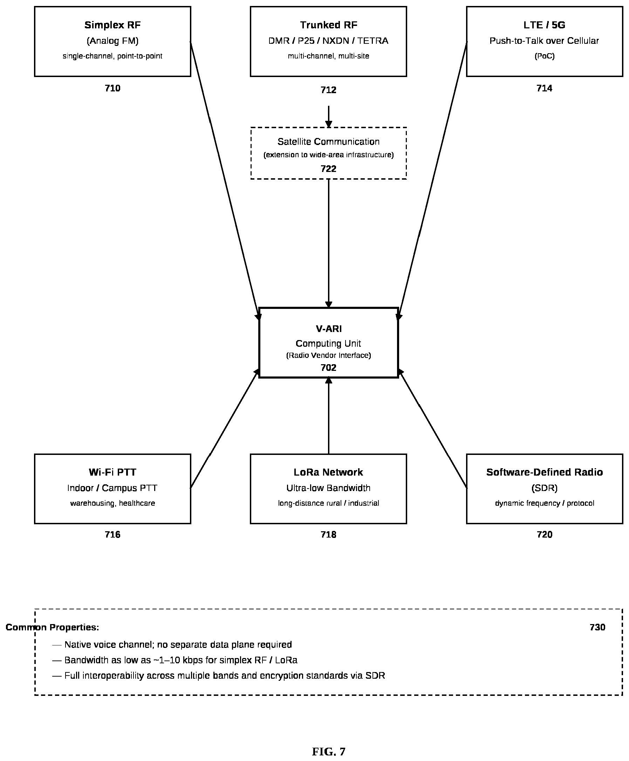

FIG. 7 shows radio network and communication variants in a comparative diagram displaying supported communication modes for V-ARI operation, including Simplex RF, Trunked RF, LTE/5G Push-to-Talk, Wi-Fi PTT, LoRa Networks, and Software-Defined Radios (SDRs) with dynamic protocol adaptation, according to some embodiments.

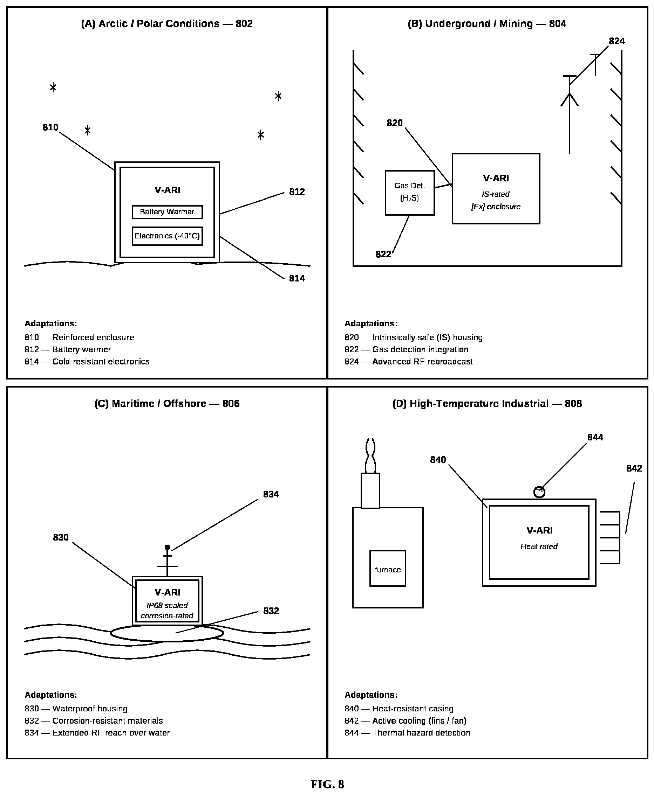

FIG. 8 shows extreme environment deployment scenarios in a four-panel illustration depicting V-ARI hardware adaptations for Arctic conditions, Underground mining operations, Maritime offshore deployments, and High-temperature industrial environments, highlighting unique design considerations and resiliency features, according to some embodiments.

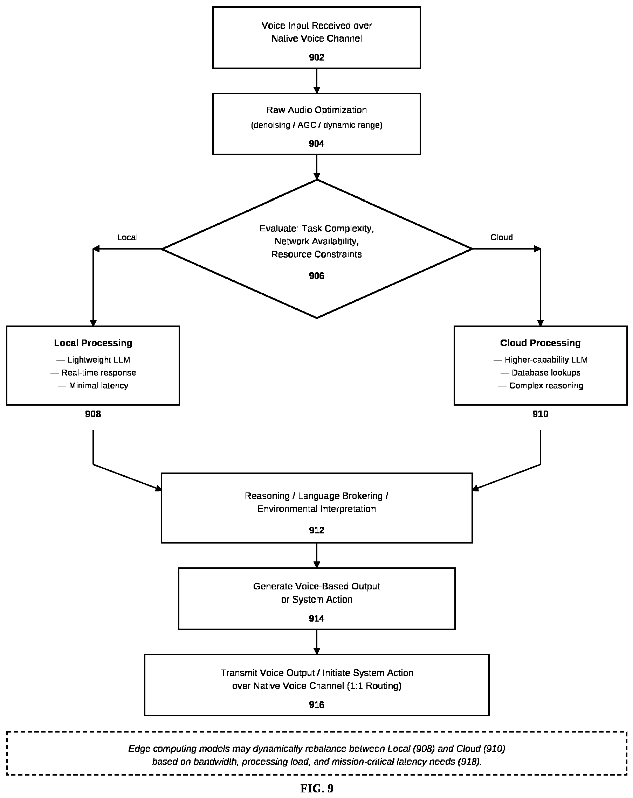

FIG. 9, FIG. 10, FIG. 11, and FIG. 12 show example method steps and data or communication flow implemented by the system, according to some embodiments.

FIG. 9 is a flowchart depicting an example local-versus-cloud processing decision flow implemented by the V-ARI system, according to some embodiments. In some implementations, the flow begins with receipt of a task, command, or inference request, followed by evaluation of one or more operational parameters including task complexity, latency requirements, network availability, bandwidth conditions, device power state, processor utilization, memory availability, and mission-criticality. Based on the evaluated parameters, the system selectively routes the task to local onboard processing, remote cloud-based processing, or a hybrid execution mode. In some embodiments, the flow further includes fallback handling, deferred execution, prioritization logic, and dynamic reassessment of processing location in response to changing environmental or system conditions.

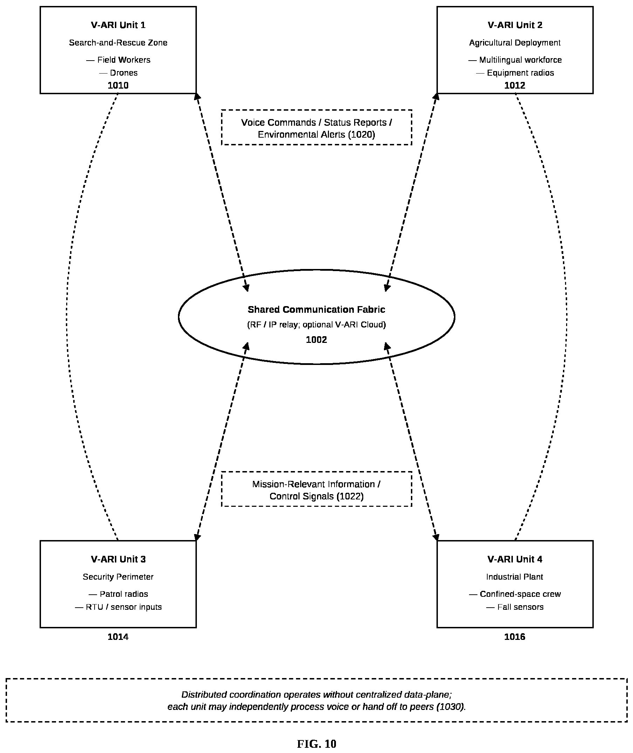

FIG. 10 is a schematic view depicting coordination among multiple distributed V-ARI units operating across separate mission areas, according to some embodiments. In some implementations, the V-ARI units communicate through a shared communication fabric configured to exchange voice commands, operational status reports, environmental alerts, telemetry data, routing information, and mission-relevant control signals. The figure further illustrates interoperability between mobile units, fixed infrastructure nodes, cloud services, and remote operators, enabling synchronized task execution, situational awareness sharing, escalation handling, and distributed decision-making. In some embodiments, the communication fabric supports peer-to-peer communications, centralized orchestration, encrypted message exchange, and failover routing.

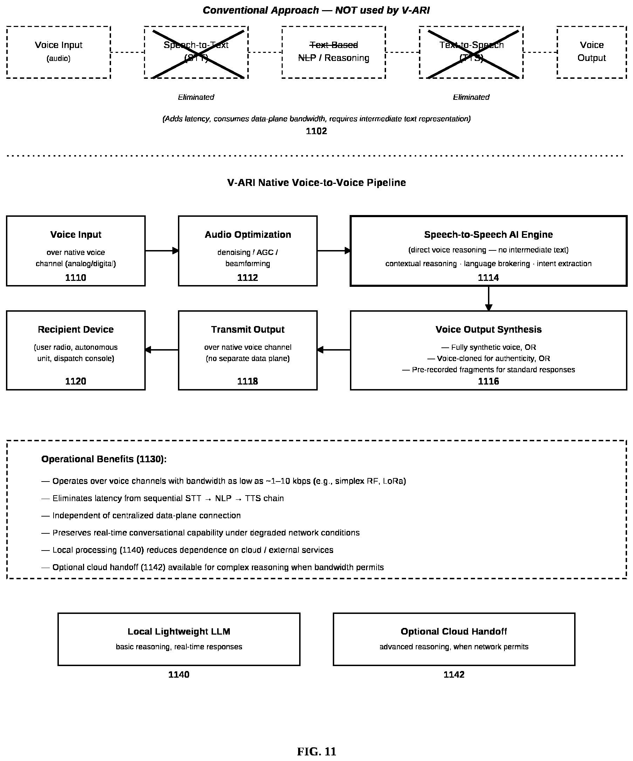

FIG. 11 is a schematic view depicting an example voice-to-voice native processing pipeline implemented by the V-ARI system, according to some embodiments, and contrasting the same with a conventional speech-to-text/text-to-speech architecture. In some implementations, the native processing pipeline receives spoken audio input and performs direct voice reasoning, semantic interpretation, contextual analysis, and response generation without requiring intermediate text transcription or synthesized speech reconstruction. The figure further illustrates optional cloud handoff pathways for enhanced reasoning, large-model inference, or distributed processing operations. In contrast, the conventional pipeline is shown as relying upon sequential speech recognition, text-based processing, and speech synthesis stages, which may introduce latency, transcription errors, or contextual degradation.

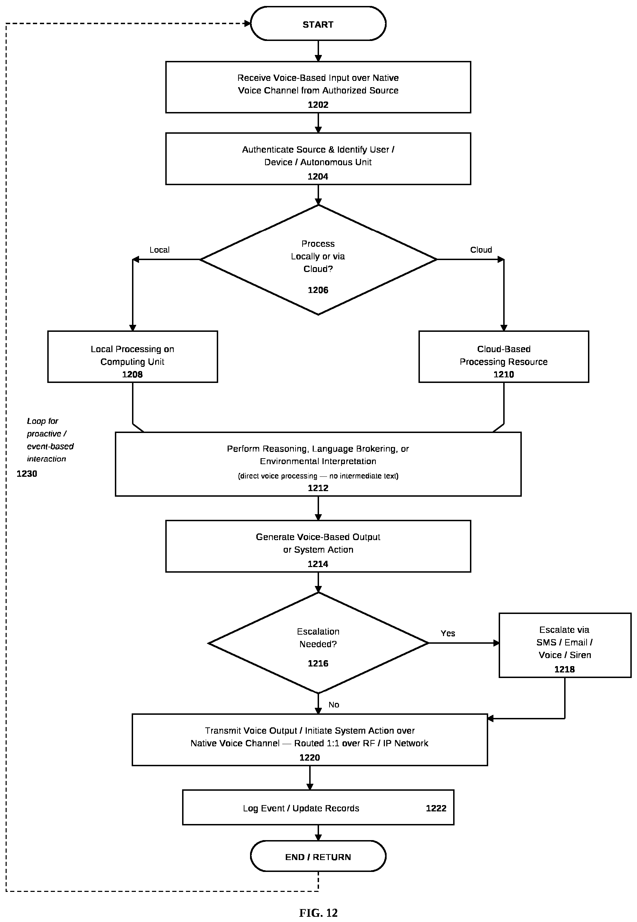

FIG. 12 is an end-to-end method flowchart depicting operation of the V-ARI system, according to some embodiments. In some implementations, the method includes receiving voice input from a user or external source, performing source authentication and validation, determining a processing mode based on operational criteria, executing reasoning and response generation operations, handling escalation or exception conditions, transmitting one or more output responses or control actions, and generating corresponding event logs or audit records. The figure further depicts a proactive and/or event-based loopback mechanism in which environmental triggers, detected anomalies, user interactions, or mission-state changes cause re-entry into one or more earlier stages of the method for continued monitoring, reassessment, or adaptive response generation.

As previously described, FIG. 13 shows an example digital messaging bridge in a schematic view in accordance with one embodiment of the present disclosure, depicting external digital messaging sources (1302-1312), a V-ARI messaging bridge (1320) including inbound and outbound channel adapters (1322, 1332), a contact mapping table (1324), a language broker or translator (1326), text-to-voice synthesis (1328), voice-to-intent reply parsing (1330), and conversation threading and session persistence (1350), and a recipient radio user (1340) receiving voice prompts (1342) and providing voice replies (1344) over a native voice channel, according to some embodiments.

As previously described, FIG. 14 shows an example multi-modal display and information ecosystem in a schematic view in accordance with one embodiment of the present disclosure, depicting a V-ARI information layer (1400) maintaining shared records including live talkgroup transcriptions (1402), announcements (1404), events (1406), tickets (1408), and shared data (1410), and a plurality of input/output modalities including a two-way radio (1420), a mobile application (1422), a push-to-talk-over-cellular device (1424), a TV or smart-display application (1426), a web dashboard (1428), and an in-vehicle display (1430), each capable of performing CRUD operations (1442) against the shared records subject to role-based access control and audit logging, with real-time synchronization (1444) and per-user or per-channel language rendering (1440), according to some embodiments.

To gain a better understanding of embodiments described herein, the following examples are set forth. It will be understood that these examples are intended to describe illustrative embodiments and are not intended to limit the scope of the present disclosure in any way.

It is appreciated that certain features, which are, for clarity, described in the context of separate embodiments, may also be provided in combination in a single embodiment. Conversely, various features, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although the description has been provided in conjunction with specific embodiments thereof, it is evident that many alternatives, modifications and variations will be apparent to those skilled in the art. Accordingly, it is intended to embrace all such alternatives, modifications and variations that fall within the scope of the appended claims. Citation or identification of any reference in this application shall not be construed as an admission that such reference is available as prior art to the invention. Section headings are used herein to ease understanding of the specification and should not be construed as necessarily limiting.

## Claims

1. A system for autonomous or controlled communication within first communication environments, the system comprising:
at least one computing unit operatively connected to a radio transceiver and an information system;
wherein the computing unit is configured to:
receive voice-based input over a native voice channel from an authorized user, device, or autonomous unit;
process the voice-based input either locally on the computing unit or remotely through a cloud-based processing resource;
perform reasoning, language brokering, or environmental interpretation based on the voice-based input;
generate corresponding voice-based outputs or system actions in response to the voice-based input; and
transmit the voice-based outputs or initiate the system actions over the native voice channel or an associated communication interface,
wherein communications are routed individually to authorized users, devices, or autonomous units across RF or IP networks, and wherein the system operates independently of a centralized data-plane connection to minimize bandwidth consumption and reduce task completion latency in low-bandwidth environments.

2. The system of claim 1, wherein the computing unit is further configured to initiate bi-directional querying either proactively or in response to event-based activities or on-demand user inputs.

3. The system of claim 1 or claim 2, wherein the computing unit processes electronic or analog communication signals directly without converting the signals into intermediate text representations.

4. The system of any preceding claim, wherein the computing unit is further configured to autonomously initiate escalation protocols via at least one of a voice communication, a Short Message Service (SMS) message, or an email transmission.

5. The system of any preceding claim, wherein the computing unit monitors real-time safety conditions including periodic check-ins, digital input triggers, or location-based alerts triggered by geofencing or positional movement.

6. The system of any preceding claim, wherein the computing unit is further configured to perform multilingual voice brokering by dynamically translating voice communications between authorized users, devices, or autonomous units.

7. The system of any preceding claim, wherein multiple computing units communicate with one another to coordinate mission-relevant information, status updates, or operational tasks.

8. The system of any preceding claim, wherein the computing unit integrates with a donor radio, repeater, or system controller for communication relay and signal extension.

9. The system of any preceding claim, wherein the system is deployed at a fixed site, within a vehicle, or across a mobile or wide-area network environment; and/or
wherein the decision to process the voice-based input locally or through a cloud-based processing resource is dynamically determined based on task complexity, network availability, or resource constraints.

10. A method for facilitating autonomous or controlled communication within first communication environments, the method comprising:
receiving, at a computing unit operatively connected to a radio transceiver and an information system, a voice-based input over a native voice channel from an authorized user, device, or autonomous unit;
processing the voice-based input either locally on the computing unit or remotely through a cloud-based processing resource;
performing reasoning, language brokering, or environmental interpretation based on the voice-based input;
generating corresponding voice-based outputs or system actions in response to the voice-based input;
transmitting the voice-based outputs or initiating the system actions over the native voice channel or an associated communication interface; and
routing communications individually to authorized users, devices, or autonomous units across RF or IP networks,
wherein the method operates independently of a centralized data-plane connection to minimize bandwidth consumption and reduce task completion latency in low-bandwidth environments.

11. The method of claim 10, further comprising initiating bi-directional querying either proactively or in response to event-based activities or on-demand user inputs; and/or
wherein processing the voice-based input comprises directly processing electronic or analog communication signals without converting the signals into intermediate text representations.

12. The method of claim 10 or 11, further comprising autonomously initiating escalation protocols via at least one of a voice communication, a Short Message Service (SMS) message, or an email transmission; and/or
further comprising monitoring real-time safety conditions including performing periodic check-ins, evaluating digital input triggers, or generating location-based alerts triggered by geofencing or positional changes.

13. The method of any of claims 10 to 12, wherein the voice-based input is dynamically translated to facilitate multilingual communication between authorized users, devices, or autonomous units; and/or
wherein the decision to process the voice-based input locally or through a cloud-based processing resource is dynamically determined based on task complexity, network availability, or resource constraints.

14. A non-transitory computer readable medium or media storing instructions which, when executed by at least one processor, configure the at least one processor to complete the method steps of:
receiving, at a computing unit operatively connected to a radio transceiver and an information system, a voice-based input over a native voice channel from an authorized user, device, or autonomous unit;
processing the voice-based input either locally on the computing unit or remotely through a cloud-based processing resource;
performing reasoning, language brokering, or environmental interpretation based on the voice-based input;
generating corresponding voice-based outputs or system actions in response to the voice-based input;
transmitting the voice-based outputs or initiating the system actions over the native voice channel or an associated communication interface; and
routing communications individually to authorized users, devices, or autonomous units across RF or IP networks,
wherein the method operates independently of a centralized data-plane connection to minimize bandwidth consumption and reduce task completion latency in low-bandwidth environments.

15. The system of any of claims 1 to 9, wherein the computing unit is further configured to:
receive a digital message originating from an external digital messaging channel, the digital message being addressed to a digital address associated with an authorized radio user;
generate a voice-based output corresponding to the digital message and transmit the voice-based output to the authorized radio user over the native voice channel;
receive a voice-based reply from the authorized radio user over the native voice channel; and
route a corresponding outbound digital message back to the originating external digital messaging channel;
and/or
wherein the computing unit is further configured to:
maintain a shared information layer comprising a plurality of records;
expose the shared information layer concurrently to a plurality of input/output modalities, the modalities comprising at least the native voice channel and a digital display modality;
permit each modality, subject to role-based access control, to create, read, update, or delete records in the shared information layer; and
synchronize updates across the plurality of modalities in real time.
